# EUROPEAN PATENT SPECIFICATION

(11) **EP 1 653 109 B1**
(45) Date of publication and mention of the grant of the patent: **09.01.2008**
(21) Application number: 05023376.6
(22) Date of filing: 26.10.2005
(51) Int. Cl.: F16D 55/22, F16D 55/00, F16D 65/14

(54) **Caliper body for vehicular disc brake**
Sattelkörper für eine Fahrzeug-Scheibenbremse
Corps d'étrier pour frein à disque de véhicule

(30) Priority: 26.10.2004 JP 2004310596; 06.10.2005 JP 2005293341
(43) Date of publication of application: 03.05.2006
(73) Proprietor: NISSIN KOGYO CO., LTD., Ueda-shi, Nagano-ken (JP)
(72) Inventor: Hatakoshi, Genichi c/o Nissin Kogyo Co., Ltd., Tomi-shi Nagano 389-0514 (JP); Kozutsumi, Masato c/o Nissin Kogyo Co., Ltd., Tomi-shi Nagano 389-0514 (JP)
(74) Representative: HOFFMANN EITLE

(56) References cited:
- DE-A1- 4 234 818
- PATENT ABSTRACTS OF JAPAN vol. 2003, no. 09, 3 September 2003 (2003-09-03) -& JP 2003 148524 A (NISSIN), 21 May 2003 (2003-05-21)
- PATENT ABSTRACTS OF JAPAN vol. 018, no. 076 (M-1556), 8 February 1994 (1994-02-08) -& JP 05 288229 A (NISSIN), 2 November 1993 (1993-11-02)
- PATENT ABSTRACTS OF JAPAN vol. 2003, no. 10, 8 October 2003 (2003-10-08) & JP 2003 166566 A (NISSIN), 13 June 2003 (2003-06-13)

## Description

### BACKGROUND OF THE INVENTION

### 1. Field of the Invention

This invention relates to a caliper body for a vehicular disc brake, comprising an operating portion provided on a side of a disc rotor, the operating portion comprising: at least three cylinder holes formed along with a circumferential direction of the disc rotor, at least two of the cylinder holes functioning as first brake circuit cylinder holes, and at least one of the other cylinder holes functioning as a second brake circuit cylinder hole; at least one first fluid passageway for supplying operating fluid so as to operate first pistons inserted in the first brake circuit cylinder holes; and at least one second fluid passageway for supplying operating fluid so as to operate a second piston inserted in the second brake circuit cylinder hole. In such a caliper body the second brake circuit cylinder hole is disposed between at least two of the first brake circuit cylinder holes, and the first fluid passageway comprises a fluid passage hole linearly formed in the operating portion so as to pass through outside of a peripheral surface of the second brake circuit cylinder hole. Alternatively, in such a caliper body the second brake circuit cylinder hole is disposed between at least two of the first brake circuit cylinder holes; and the first fluid passageway comprises: a first fluid passage hole for supplying the operating fluid to at least one of the first brake circuit cylinder holes; and a second fluid passage hole for supplying the operating fluid to the other first brake circuit cylinder holes, and the first and second fluid passage holes are formed linearly so as to communicate with each other in the caliper body. Such a caliper body for a vehicular disc brake may be mounted on a vehicle such as a four-wheeled automobile and a motorcycle, and more particularly to the structure of a caliper body in which a plurality of cylinder holes formed in an operating portion are divided into two hydraulic circuits. Caliper bodies are known from DE 4 234 818 and JP 2003 148 524.

### 2. Description of the Background Art

There is know a conventional caliper bodies of a dual circuit type in which a hydraulic fluid passage in the caliper body is divided into two circuits. In the conventional caliper body, three cylinder holes are formed in an operating portion. Two circumferentially-outward cylinder holes of the three cylinder holes, which are spaced from each other in a operating portion, and passes through a region disposed outwardly of a bottom portion of the central cylinder hole (see Japanese Patent Examined Publication JP-B-2900254).

There is also known a type of caliper body in which three cylinder holes are formed in an operating portion. In the caliper body, two circumferentially-outward cylinder holes of the three cylinder holes, spaced from each other in a circumferential direction of a disc rotor, serve as first brake circuit cylinder holes while the central cylinder hole serves as a second brake circuit cylinder hole. Further, a pipe is cast in the caliper body to provide a first brake circuit fluid passage hole which bypasses the second brake circuit cylinder hole, so as to pass through a region disposed outwardly of a peripheral surface of the second brake circuit cylinder hole (see Japanese Patent Unexamined Publication JP-A-2003-166566).

In the structure of the above JP-B-2900254, however, the central cylinder hole is formed into a smaller depth, and therefore the position where to form a fluid passageway for supplying an operating fluid to this central cylinder hole has been limited, so that the layout of union holes and bleeder holes has been much limited.

In the structure of the above JP-A-2003-166566, it is difficult to cast the pipe into the proper position, and much time and labor have been required for this operation.

### SUMMARY OF THE INVENTION

According to the invention from one aspect, there is provided a caliper body as initially described characterised in that: the second brake circuit cylinder hole is offset from the first brake circuit cylinder holes in a radial direction of the disc rotor so as to be radially spaced apart from the fluid passage hole.

According to the invention from another aspect, there is provided a caliper body as initially described characterised in that: each of the cylinder holes has the same depth.

It is therefore an object of at least one embodiment of this invention to provide a caliper body for a vehicular disc brake in which two fluid passageways, used respectively for two brake circuits, can be easily formed in the caliper body, so that the cost can be reduced, and besides the caliper body can be formed into a compact design.

In order to achieve the above-mentioned object, according to a first embodiment of the present invention, there is provided a caliper body for a vehicular disc brake, comprising an operating portion provided on a side of a disc rotor, the operating portion comprising:
at least three cylinder holes formed along with a circumferential direction of the disc rotor, at least two of the cylinder holes functioning as first brake circuit cylinder holes, and at least one of the other cylinder holes functioning as a second brake circuit cylinder hole;
at least one first fluid passageway for supplying operating fluid so as to operate first pistons inserted in the first brake circuit cylinder holes; and
at least one second fluid passageway for supplying operating fluid so as to operate a second piston inserted in the second brake circuit cylinder hole,
wherein
the second brake circuit cylinder hole is disposed between at least two of the first brake circuit cylinder holes, and
the first fluid passageway comprises a fluid passage hole linearly formed in the operating portion so as to pass through outside of a peripheral surface of the second brake circuit cylinder hole, and
wherein
the second brake circuit cylinder hole is offset from the first brake circuit cylinder holes in a radial direction of the disc rotor so as to be radially spaced apart from the fluid passage hole.

According to a second embodiment of the present invention, there is also provided a caliper body for a vehicular disc brake, comprising an operating portion provided on a side of a disc rotor, the operating portion comprising:
at least three cylinder holes formed along with a circumferential direction of the disc rotor, at least two of the cylinder holes functioning as first brake circuit cylinder holes, and at least one of the other cylinder holes functioning as a second brake circuit cylinder hole;
at least one first fluid passageway for supplying operating fluid so as to operate first pistons inserted in the first brake circuit cylinder holes; and
at least one second fluid passageway for supplying operating fluid so as to operate a second piston inserted in the second brake circuit cylinder hole,
wherein
the second brake circuit cylinder hole is disposed between at least two of the first brake circuit cylinder holes,
the fluid passageway comprises:
a first fluid passage hole for supplying the operating fluid to at least one of the first brake circuit cylinder holes; and
a second fluid passage hole for supplying the operating fluid to the other first brake circuit cylinder holes, and
wherein the first and second fluid passage holes are formed linearly so as to communicate with each other in the calliper body, and
wherein each of the cylinder holes has the same depth.

According to an embodiment of the present invention, it is preferable that each of the cylinder holes has the same depth each other.

According to another embodiment of the present invention, it is preferable that the second brake circuit cylinder hole is larger in depth than the first brake circuit cylinder holes.

According to a further embodiment of the present invention, it is preferable that a fluid-introducing hole is formed in an outer side opening portion of the fluid passage hole.

According to a further embodiment of the present invention, it is preferable that a bleeder hole is formed in an outer side opening portion of the fluid passage hole.

According to a further embodiment of the present invention, it is preferable that the three cylinder holes are formed on the operating portion,
one of the cylinder hole, which is disposed between the other two cylinder holes arranged in the circumferential direction of the disc rotor, functions as the second brake circuit cylinder hole, while the other two cylinder holes functions as the first brake circuit cylinder hole.

As described hereinafter, the second brake circuit cylinder hole is offset from the first brake circuit cylinder holes in the radial direction of the disc rotor in such a manner that the second brake circuit cylinder hole is spaced apart from the fluid passage hole of the first fluid passageway. Therefore, the fluid passage hole of the first fluid passageway can be easily formed.

The first fluid passageway is formed by the two straight fluid passage holes intersecting each other, and therefore the first fluid passageway can be formed according to a change in the arrangement of the second brake circuit cylinder holes and a change in the shape of the caliper body, so that the degree of freedom of the design of the caliper body can be increased.

The three cylinder holes are formed into the same depth, and by doing so, the length of the caliper body in the axial direction of the disc rotor can be reduced, so that the compact design of the caliper body can be achieved.

The second brake circuit cylinder hole is larger in depth that the first brake circuit cylinder holes, and with this construction the layout of the second brake circuit cylinder hole, a fluid-introducing hole and a bleeder hole can be freely determined. And besides, the cylinder hole bottom-side surface of the calliper body has a stepped configuration, so that the rigidity of the calliper body increases.

The fluid-introducing hole and the bleeder hole are formed in the end portions of each of the first and second fluid passageways open to the outer surface of the caliper body, and therefore time and labor, required for a processing operation, can be reduced, so that the cost can be reduced.

### BRIEF DESCRIPTION OF THE DRAWINGS

For a better understanding of the present invention and to show how the same may be carried into effect, reference will now be made, by way of example to the accompanying drawings, in which:
Fig. 1 is a cross-sectional, front-elevational view of a first embodiment of a disc brake of the present invention;
Fig. 2 is a cross-sectional, plan view of the above disc brake;
Fig. 3 is a cross-sectional, front-elevational view of a second embodiment of a disc brake of the invention;
Fig. 4 is a cross-sectional, plan view of the above disc brake;
Fig. 5 is a cross-sectional, front-elevational view of a third embodiment of a disc brake of the invention;
Fig. 6 is a cross-sectional, front-elevational view of a fourth embodiment of a disc brake of the invention;
Fig. 7 is a cross-sectional, plan view of a fifth embodiment of a disc brake of the invention; and
Fig. 8 is a cross-sectional, front elevational view of the above disc brake.

### DETAILED DESCRIPTION OF THE PREFERRED EMBODIMENTS

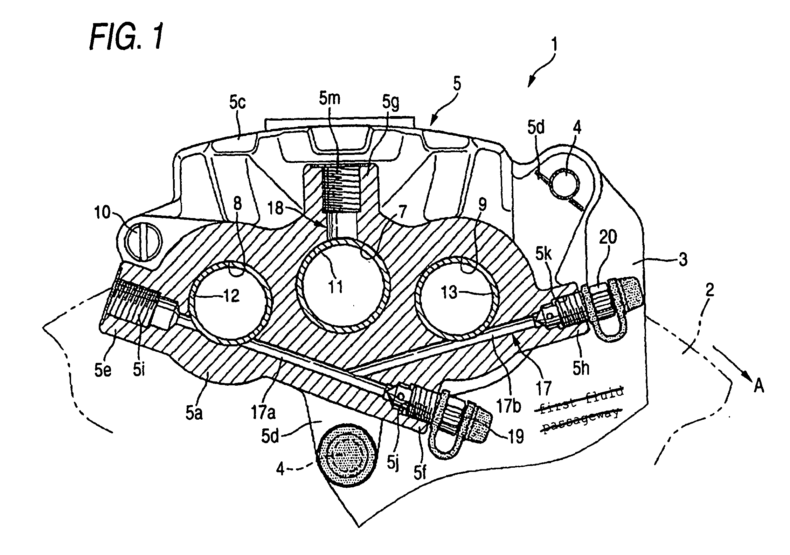

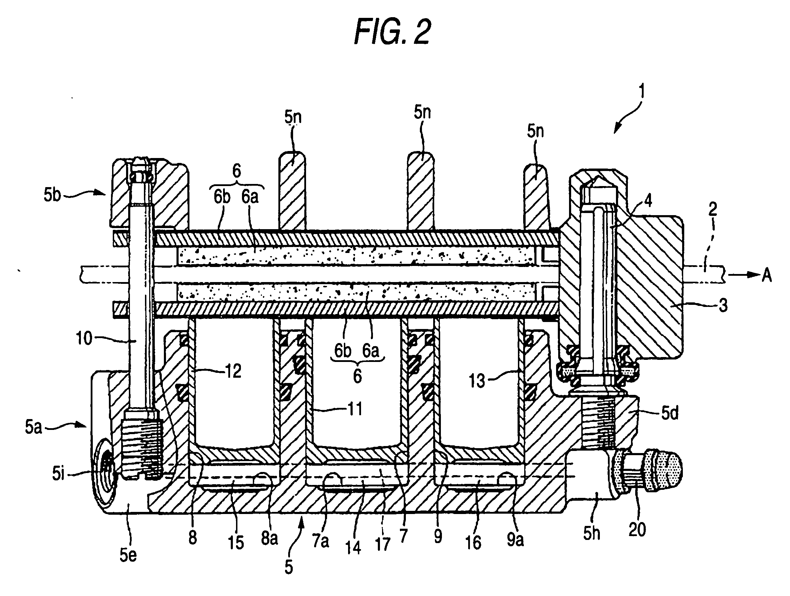

Preferred embodiments of the present invention will now be described in detail with reference to the drawings. Figs. 1 and 2 show the first embodiment of the invention, and Fig. 1 is a cross-sectional, front-elevational view of a disc brake, and Fig. 2 is a cross-sectional, plan view of the disc brake. Arrow A in the drawings indicates a direction of rotation of a disc rotor during the travel of a vehicle in a forward direction. The terms "a disc rotor run-in side" and "a disc rotor run-out side", used in the following description, are applied when the vehicle travels forward.

The disc brake 1 of this embodiment is used as a front brake of a motorcycle, and comprises a caliper bracket 3 adapted to be fixedly mounted on a vehicle body at one side of the disc rotor 2, a caliper body 5 supported in a cantilever manner on the caliper bracket 3 through a pair of slide pins 4 and 4, and a pair of opposed friction pads 6 and 6 provided respectively on the opposite sides of the disc rotor 2.

The caliper body 5 is of the 3-pot dual circuit type in which three cylinder holes 7, 8 and 9 are divided into two hydraulic circuits, and a operating portion 5a and a reaction portion 5b, provided respectively at the opposite sides of the disc rotor 2, are interconnected by a bridge portion 5c straddling the outer periphery of the disc rotor 2. Mounting arms 5d and 5d are formed on and project from the operating portion 5a, and the caliper body 5 is supported by the slide pins 4 and 4 so as to move in a direction of the axis of the disc rotor.

The opposed friction pads 6 and 6 are provided between the operating portion 5a and the reaction portion 5b in such a manner that the disc rotor 2 is interposed between the friction pads 6 and 6. Each of the friction pads 6 comprises a lining 6a, and a back plate 6b bonded to this lining 6a. A hanger pin 10, suspended on a disc run-in side portion of the caliper bracket 3 in straddling relation to the disc rotor 2, is passed through one side portion of the back plate 6b, and the other side portion of the back plate 6b is loosely fitted in a pad guide groove formed in a disc run-out side portion of the caliper bracket 3, and with this construction the friction pad 6 is suspended for movement in the axial direction of the disc rotor.

The larger-diameter cylinder hole 7, the smaller-diameter cylinder hole 8 and the smaller-diameter cylinder hole 9 are formed respectively in a central portion, a disc run-in side portion and a disc run-out side portion of the operating portion 5a. The three cylinder holes 7, 8 and 9 have the same depth. A larger-diameter piston 11 is inserted in the cylinder hole 7, and smaller-diameter pistons 12 and 13 are inserted respectively in the cylinder holes 8 and 9, and the three pistons 11, 12 and 13 have the same length. A hydraulic chamber 14 is formed between the piston 11 and a bottom portion 7a of the cylinder 7. A hydraulic chamber 15 is formed between the piston 12 and a bottom portion 8a of the cylinder 8. A hydraulic chamber 16 is formed between the piston 16 and a bottom portion 9a of the cylinder 9. The disc run-inside smaller-diameter piston 12 and the disc run-out side smaller-diameter piston 13, disposed respectively on the opposite sides of the larger-diameter piston 11 (provided at the central portion of the operating portion) serve as first brake circuit pistons, while the larger-diameter piston 11 serves as a second brake circuit piston. An operating fluid is supplied to the hydraulic chamber 15 (formed between the smaller-diameter piston 12 and the cylinder hole bottom portion 8a) and the hydraulic chamber 16 (formed between the smaller-diameter piston 13 and the cylinder hole bottom portion 9a) via a first fluid passageway 17, while an operating fluid is supplied to the hydraulic chamber 14 (formed between the larger-diameter piston 11 and the cylinder hole bottom portion 7a) via a second fluid passageway 18. A first boss 5e is formed in a projecting manner on a disc run-in side end portion of the operating portion 5a. A first bleeder boss 5f is formed in a projecting manner on a disc inner periphery-side portion of a generally central portion of the operating portion 5a. A second boss 5g is formed in a projecting manner on a disc outer periphery-side portion of the generally-central portion of the operating portion 5a, and a second bleeder boss 5h is formed in a projecting manner on a disc run-out side end portion of the operating portion 5a.

The first fluid passageway 17 includes a first fluid passage hole 17a and a second fluid passage hole 17b. The first fluid passage hole 17a is formed linearly through the caliper body 5, is open to the first boss 5e and the first bleeder boss 5f, passes through a region disposed outwardly of a disc inner periphery-side portion of the peripheral surface of the larger-diameter cylinder hole 7, and communicates with the disc run-in side hydraulic chamber 15. The second fluid passage hole 17b is formed linearly, is open to the second bleeder boss 5h, passes through the region disposed outwardly of the disc inner periphery-side portion of the peripheral surface of the larger-diameter cylinder hole 7, and communicates with the first fluid passage hole 17a in the caliper body 5, and communicates with the disc run-out side hydraulic chamber 16. A hydraulic fluid-introducing - hole 5i is formed in the first boss 5e, and bleeder holes 5j and 5k are formed respectively in the first and second bleeder bosses 5f and 5h, and bleeder screws 19 and 20 are threaded respectively into these bleeder holes 5j and 5k. The second fluid passageway 18 is open to the second boss 5g, and communicates with the central hydraulic chamber 14, and a fluid-introducing hole 5m is formed in an open end portion of the second fluid passageway 18.

The two fluid passageways 17 and 18 communicate respectively with known hydraulic master cylinders (not shown) via brake hoses (not shown) connected respectively to the union holes 5i and 5m. For example, the first fluid passageway 17 is connected to the first hydraulic master cylinder (not shown) which produces a hydraulic pressure by a braking operation of a brake lever, and the second fluid passageway 18 is connected to the second hydraulic master cylinder (not shown) which produces a hydraulic pressure by a braking operation of a brake pedal.

When the brake lever is operated for braking purposes, a hydraulic pressure, produced by the first hydraulic master cylinder, is fed into the hydraulic chambers 15 and 16 via the first fluid passageway 17, and the pistons 12 and 13 move respectively along the cylinder holes 8 and 9 toward the disc rotor, and press the lining 6a of the operating portion-side friction pad 6 against one side (or face) of the disc rotor 2. Then, because of a reaction of this pressing operation, the caliper body 5, while guided by the slide pins 4 and 4, is moved toward the operating portion 5a, and reaction force claws 5n on the reaction portion 5b press the lining 6a of the reaction portion-side friction pad 6 against the other side (or face) of the disc rotor 2, thereby effecting a braking operation. Also, when the brake pedal is operated for braking purposes, a hydraulic pressure, produced by the second hydraulic master cylinder, is fed into the hydraulic chamber 14 via the second fluid passageway 18, and the piston 11 moves along the cylinder hole 7 toward the disc rotor, and the linings 6a and 6a of the two friction pads 6 and 6 are pressed respectively against the opposite sides of the disc rotor 2 as described above, thereby effecting a braking operation.

As described above, in this embodiment, the first brake-circuit smaller-diameter cylinder holes 8 and 9, provided respectively on the opposite sides of the second brake-circuit larger-diameter cylinder hole 7, communicate with each other via the first fluid passageway 17 in bypassing relation to the larger-diameter cylinder hole 7. And besides, utilizing the peripheral wall of the larger-diameter cylinder hole 7, this first fluid passageway 17 is formed in such a manner that it passes through the region disposed outwardly of the disc inner periphery-side portion of the peripheral surface of the larger-diameter cylinder hole 7. Therefore, it is not necessary to form a thickened portion at the bottom side of the larger-diameter cylinder hole 7, and the length of the caliper body 5 in the axial direction of the disc rotor can be reduced, so that a compact design of the caliper body 5 can be achieved.

Furthermore, the straight first and second fluid passage holes 17a and 17b communicate with each other in the caliper body 5 to jointly form the first fluid passageway 17, and therefore the first fluid passageway 17 can be formed according to the arrangement of the cylinder holes 7, 8 and 9 and the shape of the caliper body 5, and the degree of freedom of the design increases. Furthermore, the cylinder holes 7, 8 and 9 are formed into the same depth, and the fluid-introducing holes 5i and 5m and the bleeder holes 5j and 5k are formed respectively in the end portions of the first and second fluid passageways 17 and 18 which are open to the outer surface of the caliper body, and therefore time and labor, required for a processing operation, can be reduced, so that the cost can be reduced.

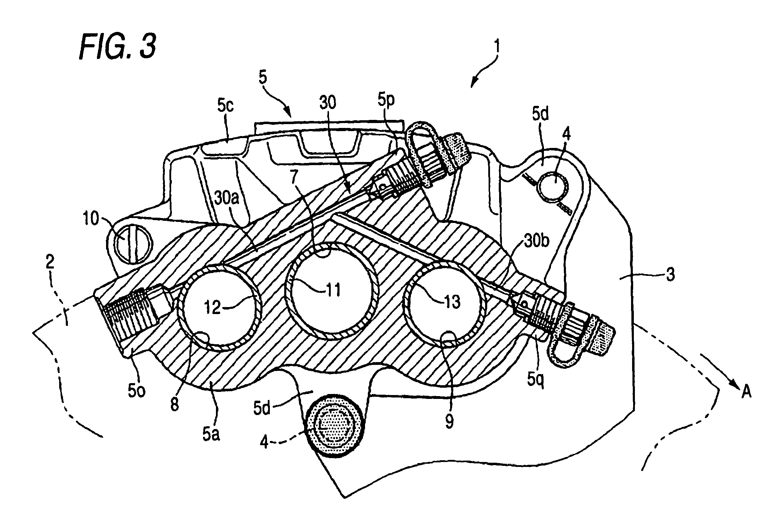

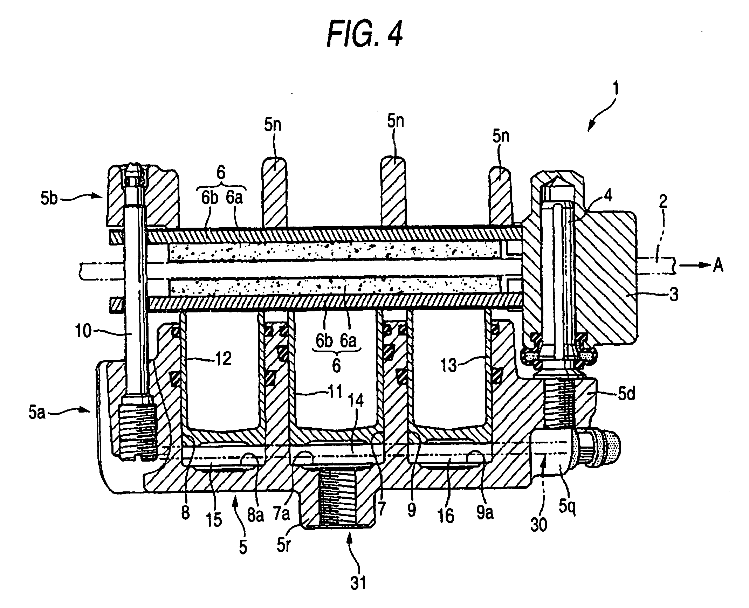

Figs. 3 and 4 are a cross-sectional, front-elevational view and a cross-sectional, plan view of the second embodiment of a disc brake of the invention, respectively. In each of the following embodiments, those members identical to those of the first embodiment will be designated by identical reference numerals, respectively, and detailed explanation thereof will be omitted. In this embodiment, a first fluid passageway 30 is linearly formed to pass through a region disposed outwardly of a disc outer periphery-side portion of a peripheral surface of a larger-diameter cylinder hole 7.

In this embodiment, a first boss 50 is formed on a disc run-in side end portion of an operating portion 5a of a caliper body 5, and a first bleeder boss 5p is formed on a disc outer periphery-side portion of a generally central portion of the operating portion 5a, and a second bleeder boss 5q is formed on a disc run-out side end portion of the operating portion 5a, and a second boss 5r is formed on a bottom portion of the larger-diameter cylinder hole 7.

A first fluid passage hole 30a of the first fluid passageway 30 is formed linearly through the caliper body 5, and is open to the first boss 5o and the first bleeder boss 5p, and passes through the region disposed outwardly of the disc outer periphery-side portion of the peripheral surface of the larger-diameter cylinder hole 7, and communicates with a disc run-in side hydraulic chamber 15. A second fluid passage hole 30b is formed linearly, and is open to the second bleeder boss 5q, and passes through the region disposed outwardly of the disc outer periphery-side portion of the peripheral surface of the larger-diameter cylinder hole 7, and communicates with the first fluid passage hole 30a in the caliper body 5, and communicates with a disc run-out side hydraulic chamber 16. A second fluid passageway 31 is open to the second boss 5r, and communicates with a central hydraulic chamber 14.

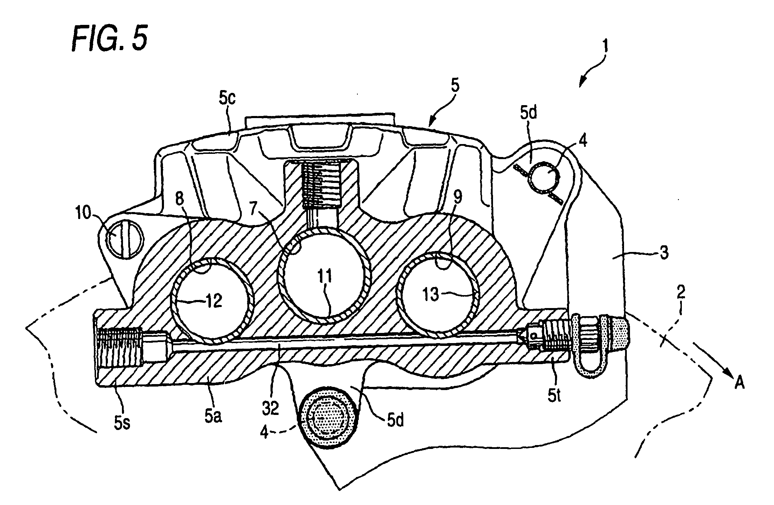

Fig. 5 is a cross-sectional, front-elevational view of the third embodiment of a disc brake of the invention. In this embodiment, a first fluid passageway 32 is formed by a single linear fluid passage hole, and is formed linearly, and passes through a region disposed outwardly of a disc inner periphery-side portion of a peripheral surface of a larger-diameter cylinder hole 7.

In this embodiment, the central larger-diameter cylinder hole 7, formed in an operating portion 5a of a caliper body 5, is offset from smaller-diameter cylinder holes 8 and 9 in a radially outward direction of a disc rotor. A first boss 5s is formed on a disc run-in side end portion of the operating portion 5a, and a first bleeder boss 5t is formed on a disc run-out side end portion of the operating portion 5a. The first fluid passageway 32 is formed linearly through the caliper body 5, and is open to the first boss 5s and the first bleeder boss 5t, and passes through the region disposed outwardly of the disc inner periphery-side portion of the peripheral surface of the larger-diameter cylinder hole 7, and communicates with a disc run-in side hydraulic chamber 15 and a disc run-out side hydraulic chamber 16. In this embodiment, the first fluid passageway 32 is formed by the single straight fluid passage hole, and therefore time and labor, required for a processing operation, can be further reduced, so that the production cost can be reduced. And besides, the larger-diameter cylinder hole 7 is offset from the smaller-diameter cylinder holes 8 and 9 in the radially outward direction of the disc rotor in such a manner that the larger-diameter cylinder hole 7 is spaced apart from the first fluid passageway 32. Therefore, the first fluid passageway 32 can be easily formed.

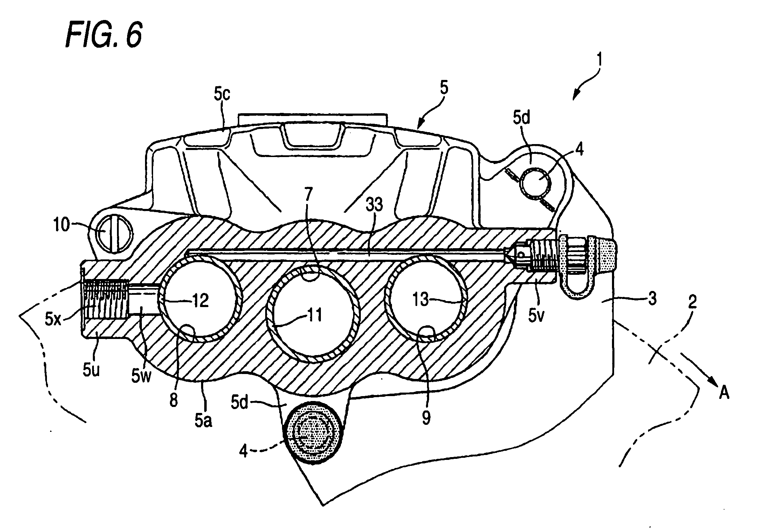

Fig. 6 is a cross-sectional, front-elevational view of the fourth embodiment of a disc brake of the invention. In this embodiment, a first fluid passageway 33 is formed by a single linear fluid passage hole, and is formed linearly, and passes through a region disposed outwardly of a disc outer periphery-side portion of a peripheral surface of a larger-diameter cylinder hole 7.

In this embodiment, the central larger-diameter cylinder hole 7, formed in an operating portion 5a of a caliper body 5, is offset from smaller-diameter cylinder holes 8 and 9 in a radially inward direction of a disc rotor. A first boss 5u is formed on a disc run-in side end portion of the operating portion 5a, and a first bleeder boss 5v is formed on a disc run-out side end portion of the operating portion 5a. The first fluid passageway 33 is formed linearly in the caliper body 5, and is open to the first boss 5v, and passes through the region disposed outwardly of the disc outer periphery-side portion of the peripheral surface of the larger-diameter cylinder hole 7, and communicates with a disc run-in side hydraulic chamber 15 and a disc run-out side hydraulic chamber 16. A fluid passage 5w which is open to the first boss 5u communicates with the disc run-in side hydraulic chamber 15, and a union hole 5x is formed in this fluid passage 5w. In this embodiment, a second fluid passage, communicating with a hydraulic chamber 14, is formed as described above for the fluid passageway 31 of the second embodiment.

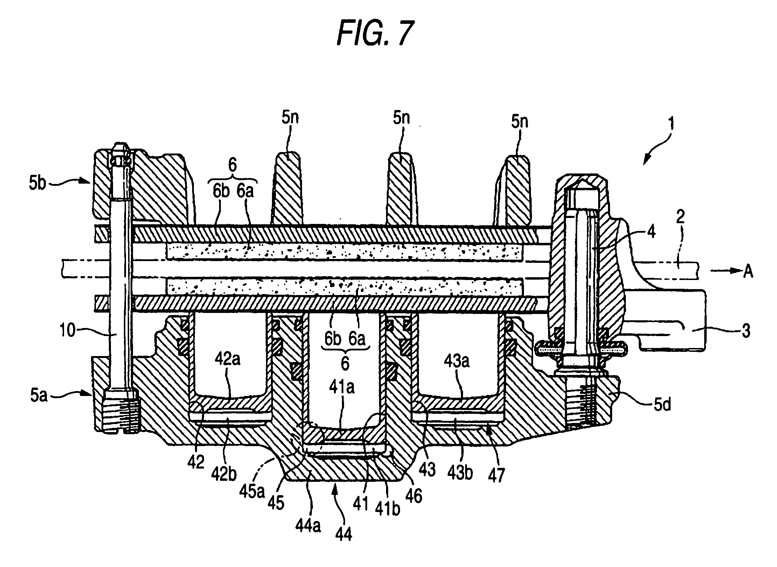

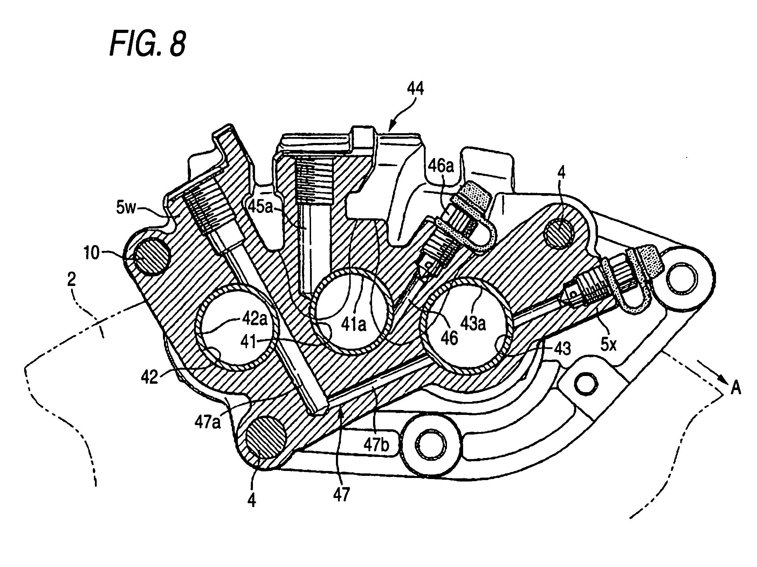

Figs. 7 and 8 are a cross-sectional, plan view and a cross-sectional, front-elevational view of the fifth embodiment of a disc brake of the invention, respectively. In this embodiment, a depth-of a central cylinder hole 41 (which serves as a second brake-circuit cylinder hole) is larger than a depth of each of a disc run-in side cylinder hole 42 and a disc run-out side cylinder hole 43 (which serve as first brake-circuit cylinder holes) disposed respectively on opposite sides of the central cylinder hole 41. -Since the cylinder hole 41 is larger in depth than the other cylinder holes 42 and 43, a cylinder hole bottom-side surface of a caliper body 44, has a projecting portion 44a formed at a central portion thereof, and therefore has a stepped configuration. The disc run-out cylinder hole 43 is larger in diameter than the other cylinder holes 41 and 42.

Thus, the second brake circuit cylinder hole 41 (disposed between the first brake circuit cylinder holes 42 and 43) is formed into the depth larger than the depth of the first brake-circuit cylinder holes 42 and 43, and the projecting portion 44a is formed on the cylinder hole bottom-side surface of the caliper body 44. With this construction, utilizing the projecting portion 11a, a second fluid passage 45 (communicating with a hydraulic chamber 41b formed between a bottom portion of the second brake-circuit cylinder hole 41 and a piston 41a) and a bleeder hole 46 can be offset from a first fluid passageway 47 and the bottom portions of the cylinder holes 42 and 43 in a direction away from a disc rotor 2. That is, a longitudinal axis of the second fluid passage 45 or the bleeder hole is substantially perpendicular to a plane of Fig.7.

Therefore, the degree of freedom of layout of the second fluid passageway 45 and the bleeder hole 46 can be enhanced, and an installation arrangement of a brake hose, connected to a union hole 45a of the second fluid passageway 45, and the position of a bleeder screw 46a, threaded into the bleeder hole 46, can be easily determined. And besides, the cylinder hole bottom-side surface of the caliper body 44 has the stepped configuration, and therefore the rigidity of the caliper body 44 increases.

The first fluid passage 47, communicating with a hydraulic chamber 42b (formed between the bottom portion of the first brake circuit cylinder hole 42 and a piston 42a) and a hydraulic chamber 43b (formed between the bottom portion of the first brake circuit cylinder hole 43 and a piston 43a), is formed by a first fluid passage hole 47a and a second fluid passage hole 47b both of which pass through a region disposed outwardly of a peripheral surface of the second brake circuit cylinder hole 41. The two fluid passage holes 47a and 47b communicate with each other at a bottom portion of the first fluid passage 47, and the first fluid passage hole 47a is open to a bleeder boss 5w, and the second fluid passage hole 47b is open to a bleeder boss 5x. The first fluid passage, used in this embodiment, can be replaced by any one of the first fluid passages of the first to fourth embodiments.

The present invention is not limited to the above embodiments in which the three cylinder holes are formed in the operating portion, and the invention can be applied to a caliper body in which four or more cylinder holes are formed in an operating portion. Further, the invention is not limited to the pin slide-type caliper body, but can be applied to an opposed piston-type caliper body, and with respect to the diameters of the cylinder holes, the invention is not limited to the above embodiments in which the central cylinder hole has the larger diameter while the other cylinder holes have the smaller diameter, and the diameters of the cylinder holes can be arbitrarily determined. Further, the fluid-introducing holes and the bleeder holes are not limited to the above embodiments, and can be suitably formed according to the shape of the cylinder holes and the shape of the caliper body.

## Claims

1. A caliper body for a vehicular disc brake, comprising an operating portion (5a) provided on a side of a disc rotor (2), the operating portion (5a) comprising:
at least three cylinder holes (7, 8, 9) formed along with a circumferential direction of the disc rotor (2), at least two of the cylinder holes functioning as first brake circuit cylinder holes (8, 9), and at least one of the other cylinder holes functioning as a second brake circuit cylinder hole (7);
at least one first fluid passageway for supplying operating fluid so as to operate first pistons (12, 13) inserted in the first brake circuit cylinder holes (8, 9); and
at least one second fluid passageway for supplying operating fluid so as to operate a second piston (11) inserted in the second brake circuit cylinder hole (7),
wherein
the second brake circuit cylinder hole (7) is disposed between at least two of the first brake circuit cylinder holes (8, 9), and
the first fluid passageway comprises a fluid passage hole (32, 33) linearly formed in the operating portion (5a) so as to pass through outside of a peripheral surface of the second brake circuit cylinder hole (7),
**characterised in that**:
the second brake circuit cylinder hole (7) is offset from the first brake circuit cylinder holes (8, 9) in a radial direction of the disc rotor (2) so as to be radially spaced apart from the fluid passage hole (32, 33).

2. A caliper body for a vehicular disc brake, comprising an operating portion (5a) provided on a side of a disc rotor (2), the operating portion (5a) comprising:
at least three cylinder holes (7, 8, 9) formed along with a circumferential direction of the disc rotor (2), at least two of the cylinder holes functioning as first brake circuit cylinder holes (8, 9), and at least one of the other cylinder holes functioning as a second brake circuit cylinder hole (7);
at least one first fluid passageway (17, 30, 47) for supplying operating fluid so as to operate first pistons (12, 13) inserted in the first brake circuit cylinder holes (8, 9); and
at least one second fluid passageway (18, 31, 46) for supplying operating fluid so as to operate a second piston (11) inserted in the second brake circuit cylinder hole (7),
wherein
the second brake circuit cylinder hole (7) is disposed between at least two of the first brake circuit cylinder holes (8, 9);
the first fluid passageway (17, 30, 47) comprises:
a first fluid passage hole (17a, 30a, 47a) for supplying the operating fluid to at least one of the first brake circuit cylinder holes (8); and
a second fluid passage hole (17b, 30b, 47b) for supplying the operating fluid to the other first brake circuit cylinder holes (9), and
the first and second fluid passage holes are formed linearly so as to communicate with each other in the caliper body;
**characterised in that**:
each of the cylinder holes (7, 8, 9) has the same depth.

3. The caliper body for the vehicular disc brake according to claim 1, **characterised in that** each of the cylinder holes (7, 8, 9) has the same depth.

4. The caliper body for the vehicular disc brake according to claim 1, **characterised in that** the second brake circuit cylinder hole (7) is larger in depth than the first brake circuit cylinder holes (8, 9).

5. The caliper body for the vehicular disc brake according to any one of claims 1 to 4, **characterised in that** a fluid-introducing hole (5i, 5m) is formed in an outer side opening portion of the fluid passage hole (17, 18).

6. The caliper body for the vehicular disc brake according to any one of claims 1 to 5, **characterised in that** a bleeder hole (5j, 5k) is formed in an outer side opening portion of the fluid passage hole (17, 18).

7. The caliper body for the vehicular disc brake according to any one of claims 1 to 6, **characterised in that** the three cylinder holes (7, 8, 9) are formed on the operating portion (5a), and
one of the cylinder hole (7), which is disposed between the other two cylinder holes (8, 9) arranged in the circumferential direction of the disc rotor, functions as the second brake circuit cylinder hole (7), while the other two cylinder holes functions as the first brake circuit cylinder holes (8, 9).

## Patentansprüche

1. Bremssattelkörper für eine Fahrzeug-Scheibenbremse, umfassend einen Betriebsabschnitt (5a), der an einer Seite einer Bremsscheibe (2) vorgesehen ist, wobei der Betriebsabschnitt (5a) umfasst:
wenigstens drei Zylinderöffnungen (7, 8, 9), die entlang mit einer Umfangsrichtung der Bremsscheibe (2) ausgebildet sind, wobei wenigstens zwei der Zylinderöffnungen als erste Bremskreiszylinderöffnungen (8, 9) dienen und wenigstens eine der anderen Zylinderöffnungen als eine zweite Bremskreiszylinderöffnung (7) dient;
wenigstens einen ersten Fluiddurchgang zum Zuführen eines Betriebsfluids, um erste Kolben (12, 13), die in die ersten Bremskreiszylinderöffnungen (8, 9) eingebracht sind, zu betreiben; und
wenigstens einen zweiten Fluiddurchgang zum Zuführen eines Betriebsfluids, um einen zweiten Kolben (11), der in die zweite Bremskreiszylinderöffnung (7) eingebracht ist, zu betreiben,
bei dem,
die zweite Bremskreiszylinderöffnung (7) zwischen wenigstens zwei der ersten Bremskreiszylinderöffnungen (8, 9) angeordnet ist, und
der erste Fluiddurchgang eine Fluiddurchgangsöffnung (32, 33) umfasst, die linear in dem Betriebsabschnitt (5a) ausgebildet ist, um außerhalb einer Umfangsoberfläche der zweiten Bremskreiszylinderöffnung (7) durch zu treten,
**dadurch gekennzeichnet, dass**:
die zweite Bremskreiszylinderöffnung (7) von den ersten Bremskreiszylinderöffnungen (8, 9) in einer radialen Richtung der Bremsscheibe (2) verschoben ist, um radial von der ersten Fluiddurchgangsöffnung (32, 33) beabstandet zu sein.

2. Bremssattelkörper für eine Fahrzeug-Scheibenbremse, umfassend einen Betriebsabschnitt (5a), der an einer Seite einer Bremsscheibe (2) vorgesehen ist, wobei der Betriebsabschnitt (5a) umfasst:
wenigstens drei Zylinderöffnungen (7, 8, 9), die entlang mit einer Umfangsrichtung der Bremsscheibe (2) ausgebildet sind, wobei wenigstens zwei der Zylinderöffnungen als erste Bremskreiszylinderöffnungen (8, 9) dienen und wenigstens eine der anderen Zylinderöffnungen als eine zweite Bremskreiszylinderöffnung (7) dient;
wenigstens einen ersten Fluiddurchgang (17, 30, 47) zum Zuführen eines Betriebsfluids, um erste Kolben (12, 13), die in die ersten Bremskreiszylinderöffnungen (8, 9) eingebracht sind, zu betreiben; und
wenigstens einen zweiten Fluiddurchgang (18, 31, 46) zum Zuführen eines Betriebsfluids, um einen zweiten Kolben (11), der in die zweite Bremskreiszylinderöffnung (7) eingebracht ist, zu betreiben,
bei dem,
die zweite Bremskreiszylinderöffnung (7) zwischen wenigstens zwei der ersten Bremskreiszylinderöffnungen (8, 9) angeordnet ist;
wobei der erste Fluiddurchgang (17, 30, 47) umfasst:
eine erste Fluiddurchgangsöffnung (17a, 30a, 47a) zum Zuführen des Betriebsfluids zu wenigstens einer der ersten Bremskreiszylinderöffnungen (8); und
eine zweite Fluiddurchgangsöffnung (17b, 30b, 47b) zum Zuführen des Betriebsfluids zu den anderen ersten Bremskreiszylinderöffnungen (9), und
wobei die ersten und zweiten Fluiddurchgangsöffnungen linear ausgebildet sind, um miteinander in dem Bremssattelkörper zu kommunizieren;
**dadurch gekennzeichnet, dass**:
jede der Zylinderöffnungen (7, 8, 9) dieselbe Tiefe aufweist.

3. Bremssattelkörper für eine Fahrzeug-Scheibenbremse nach Anspruch 1, **dadurch gekennzeichnet, dass** jede der Zylinderöffnungen (7, 8, 9) dieselbe Tiefe aufweist.

4. Bremssattelkörper für eine Fahrzeug-Scheibenbremse nach Anspruch 1, **dadurch gekennzeichnet, dass** die zweite Bremskreiszylinderöffnung (7) eine größere Tiefe als die ersten Bremskreiszylinderöffnungen (8, 9) aufweist.

5. Bremssattelkörper für eine Fahrzeug-Scheibenbremse nach einem der Ansprüche 1 bis 4, **dadurch gekennzeichnet, dass** eine Fluideinbringöffnung (5i, 5m) in einem äußeren Seitenöffnungsabschnitt der Fluiddurchgangsöffnung (17, 18) ausgebildet ist.

6. Bremssattelkörper für eine Fahrzeug-Scheibenbremse nach einem der Ansprüche 1 bis 5, **dadurch gekennzeichnet, dass** eine Entlüftungsöffnung (5j, 5k) in einem äußeren Seitenöffnungsabschnitt der Fluiddurchgangsöffnung (17, 18) ausgebildet ist.

7. Bremssattelkörper für eine Fahrzeug-Scheibenbremse nach einem der Ansprüche 1 bis 6, **dadurch gekennzeichnet, dass** die drei Zylinderöffnungen (7, 8, 9) an dem Betriebsabschnitt (5a) ausgebildet sind, und
eine der Zylinderöffnung (7), die zwischen den anderen zwei Zylinderöffnungen (8, 9) angeordnet ist, die in der Umfangsrichtung der Bremsscheibe angeordnet sind, als die zweite Bremskreiszylinderöffnung (7) dient, während die anderen zwei Zylinderöffnungen als die ersten Bremskreiszylinderöffnungen (8, 9) dienen.

## Revendications

1. Corps d'étrier pour frein à disque de véhicule, comprenant une partie de manoeuvre (5a) prévue sur un côté d'un rotor de disque (2), la partie de manoeuvre (5a) comprenant :
au moins trois trous pour cylindres (7, 8, 9) formés suivant une direction circonférentielle du rotor de disque (2), au moins deux des trous pour cylindres servant de trous pour cylindres de premier circuit de freinage (8, 9), et au moins l'un des autres trous pour cylindres servant de trou pour cylindre de second circuit de freinage (7) ;
au moins un premier passage de fluide pour fournir un fluide de fonctionnement afin d'actionner des premiers pistons (12, 13) insérés dans les trous pour cylindres de premier circuit de freinage (8, 9) ; et
au moins un second passage de fluide pour fournir un fluide de fonctionnement afin d'actionner un deuxième piston (11) inséré dans le trou pour cylindre de second circuit de freinage (7),
dans lequel
le trou pour cylindre de second circuit de freinage (7) est disposé entre au moins deux des trous pour cylindres de premier circuit de freinage (8, 9), et
le premier passage de fluide comprend un trou de passage de fluide (32, 33) formé de manière linéaire dans la partie de manoeuvre (5a) de façon à passer à l'extérieur d'une surface périphérique du trou pour cylindre de second circuit de freinage (7),
**caractérisé en ce que** :
le trou pour cylindre de second circuit de freinage (7) est décalé par rapport aux trous pour cylindres de premier circuit de freinage (8, 9) dans un direction radiale du rotor de disque (2) de manière à être radialement situé à distance du trou de passage de fluide (32, 33).

2. Corps d'étrier pour frein à disque de véhicule, comprenant une partie de manoeuvre (5a) prévue sur un côté d'un rotor de disque (2), la partie de manoeuvre (5a) comprenant :
au moins trois trous pour cylindres (7, 8, 9) formés suivant une direction circonférentielle du rotor de disque (2), au moins deux des trous pour cylindres servant de trous pour cylindres de premier circuit de freinage (8, 9), et au moins l'un des autres trous pour cylindres servant de trou pour cylindre de second circuit de freinage (7) ;
au moins un passage de fluide (17, 30, 47) pour fournir un fluide de fonctionnement afin d'actionner des premiers pistons (12, 13) insérés dans les trous pour cylindres de premier circuit de freinage (8, 9) ; et
au moins un second passage de fluide (18, 31, 46) pour fournir un fluide de fonctionnement afin d'actionner un deuxième piston (11) inséré dans le trou pour cylindre de second circuit de freinage (7),
dans lequel
le trou pour cylindre de second circuit de freinage (7) est disposé entre au moins deux des trous pour cylindres de premier circuit de freinage (8, 9);
le premier passage de fluide (17, 30, 47) comprend :
un premier trou de passage de fluide (17a, 30a, 47a) pour fournir le fluide de fonctionnement à au moins l'un (8) des trous pour cylindres de premier circuit de freinage ; et
un second trou de passage de fluide (17b, 30b, 47b) pour fournir le fluide de fonctionnement à l'autre (9) des trous pour cylindres de premier circuit de freinage, et
les premier et second trous de passage de fluide sont formés de manière linéaire afin de communiquer entre eux dans le corps d'étrier ;
**caractérisé en ce que** :
chacun des trous pour cylindres (7, 8, 9) a la même profondeur.

3. Corps d'étrier pour frein à disque de véhicule selon la revendication 1, **caractérisé en ce que** chacun des trous pour cylindres (7, 8, 9) a la même profondeur.

4. Corps d'étrier pour frein à disque de véhicule selon la revendication 1, **caractérisé en ce que** le trou pour cylindre de second circuit de freinage (7) a une plus grande profondeur que les trous pour cylindres de premier circuit de freinage (8, 9).

5. Corps d'étrier pour frein à disque de véhicule selon l'une quelconque des revendications 1 à 4, **caractérisé en ce qu'**un trou d'introduction de fluide (5i, 5m) est formé dans une partie du trou de passage de fluide (17, 18) s'ouvrant vers le côté extérieur.

6. Corps d'étrier pour frein à disque de véhicule selon l'une quelconque des revendications 1 à 5, **caractérisé en ce qu'**un trou de purge (5j, 5k) est formé dans une partie du trou de passage de fluide (17, 18) s'ouvrant vers le côté extérieur.

7. Corps d'étrier pour frein à disque de véhicule selon l'une quelconque des revendications 1 à 6, **caractérisé en ce que** les trois trous pour cylindres (7, 8, 9) sont formés sur la partie de manoeuvre (5a), et
l'un (7) des trous pour cylindres, qui est disposé entre les deux autres trous pour cylindres (8, 9), ageniés dans la direction circonférentielle du rotor de disque, sert de trou pour cylindre de second circuit de freinage (7), tandis que les deux autres trous pour cylindres servent de trous pour cylindres de premier circuit de freinage (8, 9).
